# EUROPÄISCHE PATENTSCHRIFT

(11) **EP 1 758 726 B1**
(45) Veröffentlichungstag und Bekanntmachung des Hinweises auf die Patenterteilung: **29.07.2009**
(21) Anmeldenummer: 05748416.4
(22) Anmeldetag: 09.06.2005
(51) Int. Cl.: B29C 51/02, B29C 51/04, B29C 51/06, B65B 3/02, B29C 49/02

(54) **VERFAHREN ZUR HERSTELLUNG VON PORTIONSPACKUNGEN AUS WASSERLÖSLICHEM POYLMERFILM FÜR WASCH-ODER REINIGUNGSAKTIVE SUBSTANZEN**
METHOD FOR THE PRODUCTION OF PORTIONED PACKAGES MADE OF WATER-SOLUBLE POLYMER FILM FOR DETERGENT SUBSTANCES
PROCEDE POUR LA PRODUCTION D'EMBALLAGES-PORTIONS CONSTITUES D'UN FILM POLYMERE HYDROSOLUBLE POUR DES SUBSTANCES DETERGENTES

(30) Priorität: 22.06.2004 DE 102004030148
(43) Veröffentlichungstag der Anmeldung: 07.03.2007
(73) Patentinhaber: Henkel AG & Co. KGaA, 40589 Düsseldorf (DE)
(72) Erfinder: BARTHEL, Wolfgang, 40764 Langenfeld (DE); FILECCIA, Salvatore, 46049 Oberhausen (DE); TIMMANN, Ulf, Arno, 50825 Köln (DE); NITSCH, Christian, 40591 Düsseldorf (DE); HOLDERBAUM, Thomas, 40723 Hilden (DE); PEGELOW, Ulrich, 40597 Düsseldorf (DE); DÜFFELS, Arno, 40479 Düsseldorf (DE); GENTSCHEV, Pavel, 40789 Monheim (DE)
(86) Internationale Anmeldenummer: PCT/EP2005/006179
(87) Internationale Veröffentlichungsnummer: WO 2005/123368

(56) Entgegenhaltungen:
- WO-A-02/16207
- WO-A-20/05077642
- DE-A1- 10 244 803
- DE-A1- 10 338 370
- US-A- 4 883 630
- US-A- 5 941 054
- PATENT ABSTRACTS OF JAPAN Bd. 009, Nr. 080 (M-370), 10. April 1985 (1985-04-10) & JP 59 209821 A (KODAMA KAGAKU KOGYO KK), 28. November 1984 (1984-11-28)

## Beschreibung

Die vorliegende Erfindung liegt auf dem Gebiet der Portionsverpackungen für Wasch- oder Reinigungsmittel, wie sie beispielsweise für die Reinigung von Textilien, Geschirr oder harten Oberflächen eingesetzt werden.

Die vorliegende Erfindung betrifft ein Verfahren zur Herstellung eines wasserlöslichen oder wasserdispergierbaren Behälters mit mindestens einer Aufnahmekammer.

Wasch- oder Reinigungsmittel sind heute für den Verbraucher in vielfältigen Angebotsformen erhältlich. Neben Waschpulvern und -granulaten umfaßt dieses Angebot beispielsweise auch Reinigungsmittelkonzentrate in Form extrudierter oder tablettierter Zusammensetzungen. Diese festen, konzentrierten bzw. verdichteten Angebotsformen zeichnen sich durch ein verringertes Volumen pro Dosiereinheit aus und senken damit die Kosten für Verpackung und Transport. Insbesondere die Wasch- oder Reinigungsmitteltabletten erfüllen dabei zusätzlich den Wunsch des Verbrauchers nach einfacher Dosierung. Die entsprechenden Mittel sind im Stand der Technik umfassend beschrieben. Neben den angeführten Vorteilen weisen kompaktierte Wasch- oder Reinigungsmittel jedoch auch eine Reihe von Nachteilen auf. Insbesondere tablettierte Angebotsformen zeichnen sich aufgrund ihrer hohen Verdichtung häufig durch einen verzögerten Zerfall und damit eine verzögerte Freisetzung ihrer Inhaltsstoffe aus. Zur Auflösung dieses "Widerstreits" zwischen ausreichender Tablettenhärte und kurzen Zerfallszeiten wurden in der Patentliteratur zahlreiche technische Lösungen offenbart, wobei an dieser Stelle beispielhaft auf die Verwendung so genannter Tablettensprengmittel verwiesen werden soll. Dieses Zerfallsbeschleuniger werden den Tabletten zusätzlich zu den wasch- oder reinigungsaktiven Substanzen zugesetzt, wobei sie selbst in der Regel keine wasch- oder reinigungsaktiven Eigenschaften aufweisen, und erhöhen auf diese Weise die Komplexität und die Kosten dieser Mittel. Ein weiterer Nachteil der Tablettierung von Aktivsubstanzgemischen, insbesondere wasch- oder reinigungsaktiv-substanzhaltigen Gemischen, ist die Inaktivierung der enthaltenen Aktivsubstanzen durch den bei der Tablettierung auftretenden Kompaktierungsdruck. Eine Inaktivierung der Aktivsubstanzen kann auch auf Grund der in Folge der Tablettierung vergrößerten Kontaktflächen der Inhaltsstoffe durch chemische Reaktion erfolgen.

Als Alternative zu den zuvor beschriebenen partikulären oder kompaktierten Wasch- oder Reinigungsmitteln werden in den letzten Jahren zunehmend feste oder flüssige Wasch- oder Reinigungsmittel beschrieben, welche eine wasserlösliche oder wasserdispergierbare Verpackung aufweisen. Diese Mittel zeichnen sich wie die Tabletten durch eine vereinfachte Dosierung aus, da sie zusammen mit der Umverpackung in die Waschmaschine oder die Geschirrspülmaschine dosiert werden können, andererseits ermöglichen sie aber gleichzeitig auch die Konfektionierung flüssiger oder pulverförmiger Wasch- oder Reinigungsmittel, welche sich gegenüber den Kompaktaten durch eine bessere Auflösung und schnellere Wirksamkeit auszeichnen. So offenbart beispielsweise die EP 1 314 654 A2 (Unilever) einen kuppelförmigen Pouch mit einer Aufnahmekammer, welche eine Flüssigkeit enthält.

Gegenstand der WO 01/83657 A2 (Procter&Gamble) sind hingegen Beutel, welche in einer Aufnahmekammer zwei teilchenförmigen Feststoffe enthalten, die jeweils in fixierten Regionen vorliegen und sich nicht miteinander vermischen.

Neben den Verpackungen, welche nur eine Aufnahmekammer aufweisen wurden im Stand der Technik auch Angebotsformen offenbart, die mehr als eine Aufnahmekammer, bzw. mehr als einen Beutel umfassen.

Gegenstand der europäischen Anmeldung EP 1 256 623 A1 (Procter&Gamble) ist ein Kit aus mindestens zwei Beuteln mit unterschiedlicher Zusammensetzung und unterschiedlicher Optik. Die Beutel liegen getrennt voneinander und nicht als kompaktes Einzelprodukt vor.

Ein Verfahren zur Herstellung von Mehrkammerbeuteln durch Verkleben zweiter Einzelkammern beschreibt die internationale Anmeldung WO 02/86736 A1 (Reckitt Benckiser).

Die japanische Offenlegungsschrift JP 59 209821 (Kodama Kagaku Kogyo KK) beschreibt ein zweistufiges Verfahren zur Herstellung eines Behälters, bei welchem ein gepresster Vorformling aus einer Pressvorrichtung in eine Tiefziehmulde verbracht und dort unter Einwirkung eines Unterdrucks in seine endgültige Raumform überführt wird.

Die US amerikanische Patentschrift US 4,883,630 (Battenfeld Fischer) hat ein Herstellverfahren für Behälter zum Gegenstand, bei welchem ein durch Spritzguß hergestellter Rohling durch Druckformung gestreckt und nachfolgend durch Blasformung zum fertigen Hohlkörper verarbeitet wird.

Bei dem in der US amerikanischen Patentschrift US 5,941, 054 (The Elizabeth and Sandor Valyi Foundation) beschriebenen Formverfahren für Behälter wird einer ersten Formstation gebildeter Vorformling in eine Blasformstation verbracht und dort weiter verformt.

Die internationale Anmeldung WO 02/16207 A1 (Reckitt Benckiser) hat ein Verfahren zur Herstellung befüllter und verschlossener Tiefzlehbehälter zum Gegenstand.

In der deutschen Patentanmeldung DE 102 44 803 A1 (Henkel) wird ein Verfahren zur Herstellung befüllter wasserlöslicher Behälter beschrieben, in dessen Verlauf das Verpackungsmaterial auf die in dem Behälter enthaltenen Wasch- oder Reinigungsmittel aufgeschrumpft wird.

Aufgabe der vorliegenden Anmeldung war es, ein Verfahren zur Verpackung von Wasch- oder Reinigungsmitteln bereitzustellen, welches die Konfektionierung von mindestens zwei Wasch- oder Reinigungsmittelzusammensetzungen in voneinander getrennten Aufnahmekammern einer kompakten Dosiereinheit ermöglicht. Das Verfahrensendprodukt sollte sich durch eine ansprechende Optik auszeichnen.

Es war daher die Aufgabe der vorliegenden Anmeldung, wasserlösliche oder wasserdispergierbare Behälter bereitzustellen, welche ein Minimum an Leervolumen aufweisen und sich durch eine hohe Festigkeit und eine hohe mechanische Stabilität bei den üblichen Bedingungen der Herstellung, der Lagerung und des Transports auszeichnen.

Diese Aufgabe wird erfindungsgemäß durch ein Verfahren zur Herstellung eines wasserlöslichen oder wasserdispergierbaren Behälters mit mindestens einer Aufnahmekammer, umfassend die Schritte:
a) Erwärmen eines ersten wasserlöslichen oder wasserdispergierbaren Hüllmaterials auf eine Temperatur T¹;
b) Verformen des Hüllmaterials unter Ausbildung einer Aufnahmekammer; durch Einformen des Hüllmaterials in eine Tiefziehmulde
c) Abkühlen des verformten Hüllmaterials auf eine Temperatur T² < T¹;
d) Absenken des Bodens der Tiefziehmulde und Verformen des Hüllmaterials unter Vergrößerung der in Schritt b) gebildeten Aufnahmekammer gelöst.

Vorteilhafte Weiterbildungen der Erfindung sind Gegenstand der abhängigen Ansprüche.

Kennzeichnend für das erfindungsgemäße Verfahren ist die Verformung des wasserlöslichen oder wasserdispergierbaren Hüllmaterials bei zwei unterschiedlichen Temperaturen T¹ und T², wobei die Temperatur T² unterhalb der Temperatur T¹ liegt. In einem ersten Schritt dieses Verfahrens wird das wasserlösliche oder wasserdispergierbare Hüllmaterial daher auf eine Temperatur T1, das heißt, eine Temperatur oberhalb Raumtemperatur (20°C), erwärmt. Die Erwärmung des Hüllmaterials kann durch alle dem Fachmann bekannte Methoden erfolgen, wobei im Rahmen der vorliegenden Anmeldung Verfahren bevorzugt werden, bei denen die Erwärmung des wasserlöslichen oder wasserdispergierbaren Hüllmaterials in Schritt a) durch Heißluft, durch Wärmestrahlung oder durch Kontakt mit einer Heizplatte erfolgt.

Wie erwähnt wird die Temperatur des Hüllmaterials durch die Erwärmung in Schritt a) auf Temperaturen oberhalb Raumtemperatur (20°C) angehoben. Um eine zufriedenstellende Verformbarkeit des wasserlöslichen oder wasserdispergierbaren Hüllmaterials zu gewährleisten ist es jedoch bevorzugt das Hüllmaterial auf Temperaturen deutlich oberhalb Raumtemperatur, vorzugsweise auf eine Temperatur T¹ von mindestens 35 °C, vorzugsweise mindestens 40°C, bevorzugt mindestens 50°C, besonders bevorzugt mindestens 60°C und insbesondere mindestens 70°C zu erwärmen.

Die Einwirkung von Wärme auf das Hüllmaterial dient dessen erleichterter plastischen Verformung. Die Erwärmung des Hüllmaterials kann dabei beispielsweise durch Wärmestrahlung, Heißluft, oder, besonders bevorzugt, durch direkten Kontakt mit einer Heizplatte erfolgen. Alternativ können zur Erwärmung des Hüllmaterials aber auch beheizte Rollen oder Walzen eingesetzt werden. Die Dauer der Wärmebehandlung sowie die Temperatur der eingesetzten Wärmestrahlung, Heißluft, oder Heizplattenoberfläche ist dabei naturgemäß von der Art des eingesetzten Hüllmaterials abhängig. Für wasserlösliche oder wasserdispergierbare Materialien wie PVA-haltige Poylmere oder Copoylmere ist eine Temperatur T¹ zwischen 90 und 130°C, insbesondere zwischen 105 und 115°C bevorzugt. Die Dauer der Wärmebehandlung, insbesondere die Kontaktzeit bei Einsatz einer Heizplatte beträgt bevorzugt zwischen 0,1 und 7 Sekunden, besonders bevorzugt zwischen 0,2 und 6 Sekunden und insbesondere zwischen 0,3 und 4 Sekunden. Kontaktzeiten unterhalb einer Sekunde, insbesondere im Bereich von 400 bis 900 Millisekunden, vorzugsweise zwischen 500 und 800 Millisekunden haben sich für Materialien aus Polyvinylalkohol als besonders vorteilhaft erwiesen.

Um einen Kontakt zwischen dem zu verformenden Hüllmaterial und den Heizplatten zu erreichen, bestehen verschiedene Möglichkeiten. So kann das Hüllmaterial beispielsweise zwischen zwei einander gegenüberliegende Platten geführt werden, von denen wenigstens eine als Heizplatte dient, und durch Absenken und/oder Anheben einer dieser Platten in direkten Kontakt mit deren Oberflächen gebracht werden. Alternativ kann das Hüllmaterial auch unter oder über eine beheizte Oberfläche geführt und in der Folge durch Anblasen des Materials an die Oberfläche mittels Druckluft ein Kontakt hergestellt werden.

Werden Heizplatten zur Erwärmung der Hüllmaterialien eingesetzt, so kann die Erwärmung des vorzugsweise filmförmigen Hüllmaterials gleichmäßig über die gesamte Oberfläche des Films oder ungleichmäßig durch eine so genannte Zielbeheizung erfolgen. In einer bevorzugten Ausführungsform des erfindungsgemäßen Verfahrens erfolgt die Beheizung zielgerichtet mittels in der Heizplatte befindlicher Heizhöfe.

Die in den Heizplatten befindlichen Heizhöfe können planar, konkav oder konvex ausgebildet sein. Sind die Heizhöfe konvex oder konkav ausgebildet, so ist das Verhältnis des maximalen Durchmessers des Heizhofs zu seiner maximalen Höhe vorzugsweise größer 2, besonders bevorzugt größer 4 und insbesondere größer 8.

Durch die zuvor beschriebene Zielbeheizung entsteht auf der zu verarbeitenden Folie ein Gitter oder Netz nicht erwärmten und wenig elastischen Folienmaterials, welches eine unerwünschte Verformung und Streckung des Folienmaterials, beispielsweise durch das Eigengewicht der Folie oder die einwirkenden Zugkräfte beim Folientransport, im Bereich zwischen den erwärmten Folienstücken vermeidet. Die räumliche Orientierung der Aufnahmemulden zueinander sowie die räumliche Orientierung des Aufnahmemulden innerhalb des Films werden auf diese Weise stabilisiert, die Aufnahmemulden befinden sich also beim Weitertransport zum Befüllen, Versiegeln und Vereinzeln in den vorgesehenen Positionen und eine fehlerhafte Befüllung, Versiegelung oder Vereinzelung wird vermieden.

Durch die Verformung in Schritt b) des erfindungsgemäßen Verfahrens wird eine erste Aufnahmekammer geschaffen. Obwohl das erfindungsgemäße Verfahren grundsätzlich zur Herstellung von Behältern beliebiger Größe geeignet ist, hat sich dieses Verfahren insbesondere für die Herstellung von Behältern mit einem vergleichsweise geringen Volumen zwischen 1 und 60 ml, vorzugsweise 2 und 50 ml, bevorzugt 3 und 40 ml, besonders bevorzugt 4 und 30 ml und insbesondere 5 und 25 ml als vorteilhaft erwiesen. Unabhängig vom Gesamtvolumen des durch das erfindungsgemäße Verfahren hergestellten Behälters beträgt das Volumen der in Schritt b) gebildeten Aufnahmekammer vorzugsweise mindestens 1 ml, bevorzugt mindestens 2 ml, besonders bevorzugt mindestens 4 ml und insbesondere mindestens 8 ml. Durch diese erste Verformung des erwärmten Hüllmaterials wird die nachfolgende "Kaltverformung" in Schritt d) erleichtert, da diese "Kaltverformung" in Abhängigkeit von Art und Umfang der Verformung in Schritt b) räumlich gerichtet erfolgt.

In Schritt c) des erfindungsgemäßen Verfahrens wird das verformte Hüllmaterial auf eine Temperatur T² abgekühlt. Das Abkühlen kann dabei "aktiv" oder "passiv" erfolgen. Ein "passive" Abkühlung ist beispielsweise durch den Verbleib des verformten Hüllmaterials in einem in Schritt b) eingesetzten Formwerkzeug mit einer Temperatur unterhalb T¹ oder dem Transport des verformten Hüllmaterials auf einem Transportband in einer Umgebungstemperatur unterhalb einer Temperatur T₁ realisierbar. Die "aktive" Abkühlung des Hüllmaterials kann beispielsweise durch die Einwirkung von Kaltluft oder gekühlten Oberflächen erfolgen. Verfahren, bei denen das Abkühlen des Hüllmaterial in Schritt c) durch Kaltluft oder durch Kontakt mit einer gekühlten Oberfläche erfolgt, sind im Rahmen der vorliegenden Anmeldung besonders bevorzugt.

Die Endprodukte des erfindungsgemäßen Verfahrens haben sich hinsichtlich ihrer Festigkeit und ihrer mechanischen Stabilität insbesondere dann als besonders vorteilhaft erwiesen, wenn bei der Verfahrensführung sowohl in Bezug auf die Temperaturen T¹ und T², als auch in Bezug auf die in den Verfahrensschritten b) und d) erzeugten Volumina der Aufnahmekammer bestimmte bevorzugte Bereiche eingehalten werden.

Im Rahmen der vorliegenden Anmeldung sind daher solche Verfahren besonders bevorzugt, bei denen die Temperatur T² mindestens 5°C, vorzugsweise mindestens 10°C, bevorzugt mindestens 20°C und insbesondere mindestens 30°C unterhalb der Temperatur T¹ liegt. Verfahren, bei denen die Differenz der Temperaturen T1 und T2 zwischen 5 und 90°C, vorzugsweise zwischen 10 und 80°C, bevorzugt zwischen 20 und 70°C und insbesondere zwischen 30 und 60°C liegen, sind besonders bevorzugt.

Bevorzugt sind weiterhin solche Varianten des erfindungsgemäßen Verfahrens, bei denen das Vehaltnis des Volumens der in Schritt d) erzeugten Aufnahmekammervolumens zu dem in Schritt b) erzeugten Aufnahmekammervolumen 10:1 bis 1:10, vorzugsweise 7:1 bis 1:5, bevorzugt 5:1 bis 1:13, besonders bevorzugt 4:1 bis 1:2 und insbesondere 3:1 bis 1:1 beträgt.

Das erfindungsgemäße Verfahren dient der Herstellung von Portionsverpackungen für wasch- oder reinigungsaktive Substanzen. Der Zeitpunkt, an welchem die Befüllung der nach dem erfindungsgemäßen Verfahren hergestellten Behälter mit diesen Aktivsubstanzen erfolgt kann dabei variiert werden.

Das erfindungsgemäße Verfahren kann kontinuierlich oder diskontinuierlich durchgeführt werden.

Zum Verformen des wasserlöslichen Hüllmaterials in den Schritten b) und d) des erfindungsgemäßen Verfahrens eignet sich insbesondere das Verformen durch Tiefziehen. Erfindungsgemäße Verfahren, sind dadurch gekennzeichnet, dass das Verformen des Hüllmaterials in Schritt b) und in Schritt d) durch Tiefziehen erfolgt.

Als "Tiefziehen" oder "Tiefziehverfahren" werden im Rahmen der vorliegenden Anmeldung dabei Verfahren zur Verarbeitung von Verpackungsmaterialien bezeichnet, bei welchem diese nach optionaler Vorbehandlung durch Wärme und/oder Lösungsmittel mittels einer entsprechend geformten Matrize in Form gebracht werden. Dabei kann das Verpackungsmaterial beispielsweise als Platte oder Folie zwischen die beiden Teile des Werkzeugs, das Positiv und das Negativ, eingebracht und durch Zusammendrücken dieser Teile verformt werden, die Verformung kann jedoch auch ohne Einsatz eines Negativ-Werkzeugs durch Einwirkung eines Vakuums und/oder von Druckluft und/oder das Eigengewicht der eingeschlossenen Wirkstoffe oder Wirkstoffkombinationen erfolgen.

Aus der Reihe der beschriebenen Tiefziehverfahren werden solche Verfahren bevorzugt, bei denen das erste Hüllmaterial in Form einer Folie über einer mit Vertiefungen versehenen Matrize bereitgestellt und durch Einwirkung von Druckluft von der Oberseite der Folien oder durch Wirkung eines Vakuums von der Unterseite der Folien, besondere bevorzugt unter gleichzeitiger Einwirkung von Druckluft und Vakuum in die Vertiefungen der Matrize eingebracht und entsprechend der Form der Vertiefung ausgeformt wird. Besonders vorteilhafte Verfahren zeichnen sich dabei dadurch aus, daß die Folie vor dem Verformen durch Einwirken von Wärme und/oder Lösungsmitteln vorbehandelt wird. In einer weiteren bevorzugten Verfahrensvariante wird eine Folie nach optionaler Vorbehandlung (Lösungsmittel, Wärme) durch Einwirkung eines Stempels und/oder durch die Einwirkung der Gewichtskraft des Füllguts formgebend in die Vertiefung einer Matrize gepreßt.

Das oben beschriebene Anlegen eines Vakuums an der Innenseite der Vertiefungen der Matrize beim Verformen der Folie hat dabei den Vorteil, daß die in der Vertiefung unterhalb des sich verformenden Hüllmaterials befindliche Luft auf einfache Weise entfernt und das verformte Hüllmaterial in dem verformten Zustand gehalten werden kann. Bevorzugte kontinuierliche Tiefziehverfahren, das heißt Verfahren auf einer umlaufenden Endlosmatrize, bei welchem die durch Verformung erzeugten Aufnahmekammern kontinuierlich zum Befüllen bzw. Versiegeln oder sogar bis zum Ausschneiden transportiert werden, zeichnen sich dadurch aus, daß die in den Vertiefungen gebildeten Aufnahmebehälter durch ein Vakuum, welches während des Verformvorgangs angelegt wird und bis zur Beendigung des Befüllvorgangs, vorzugsweise bis zum Abschluß des Versiegelns, besonders bevorzugt bis zum Ausschneiden der Behälter aus dem Foliengittern anhält, in ihrem verformten Zustand gehalten werden.

In Schritt d) des erfindungsgemäßen Verfahrens wird das Hüllmaterial unter Vergrößerung der in Schritt b) gebildeten Aufnahmekammer vergrößert. Hierzu bieten sich dem Fachmann eine Vielzahl unterschiedlicher Vorgehensweisen, von denen in der Folge einige bevorzugte Varianten näher beschrieben werden sollen:
In dem erfindungsgemäßen Verfahren wird das Hüllmaterial in Schritt b) des Verfahrens in eine Tiefziehmulde eingeformt. Das Volumen der gebildeten Aufnahmekammer entspricht dabei im
Wesentlichen, das heißt zu mindestens 94 Vol.-%, vorzugsweise mindestens 96 Vol.-% und insbesondere zu mindestens 98 Vol.-% dem Volumen der Tiefziehmulde. Vor dem erneuten Verformen des
Hüllmaterials in Schritt d) wird dann das Volumen der Tiefziehmulde vergrößert. Diese Volumenvergrößerung wird realisiert, indem der Boden der Tiefziehmulde abgesenkt wird.

Durch die Absenkung des Muldenbodens wird die Tiefe der Mulde vergrößert. Bevorzugt werden Verfahren, bei denen die Tiefe des Mulde nach dem Absenken des Bodens zwischen 110 und 600 %, vorzugsweise zwischen 120 und 400 % und insbesondere zwischen 130 und 200 % der Muldentiefe vor dem Absenken beträgt. Bevorzugt sind weiterhin solche Verfahren, bei denen das Volumen der Mulde durch das Absenken des Bodens um 10 bis 600 Vol.-%, vorzugsweise um 20 bis 400 Vol.-% und insbesondere um 30 bis 200 Vol.-% zunimmt. Der absolute "Hub" bei der Absenkung von Muldenböden beträgt vorzugsweise zwischen 1 und 80 mm besonders bevorzugt zwischen 2 und 60 mm und insbesondere zwischen 4 und 40 mm.

Besonders bevorzugt werden weiterhin solche Verfahrensvarianten, bei denen die Mulden des Formwerkzeugs mit einem elastisch verformbaren Boden versehen sind. Bei Einsatz derartiger Formwerkzeuge kann die "Absenkung" des Muldenbodens durch eine elastische Verformung des Bodens oder der Wand realisiert werden. Bei einer solchen Verformung muß nicht notwendigerweise der gesamte Boden oder die gesamte Wand des Formwerkzeugs abgesenkt werden, es reicht vielmehr aus, den Boden oder die Wand teilweise zu Verformen. So lassen sich vormals plane Böden oder Wände beispielsweise zu konkav gewölbten Böden oder Wänden verformen.

Die durch das Tiefziehen gebildeten Aufnahmekammern können jede technisch realisierbare Form aufweisen. Sphärisch-kuppelförmige, zylindrische oder kubische Kammern sind besonders bevorzugt.
Bevorzugte Aufnahmekammern weisen mindestens eine Kante und eine Ecke auf, Aufnahmekammern mit zwei, drei, vier, fünf, sechs, sieben, acht neun, zehn, elf, zwölf, dreizehn, vierzehn, fünfzehn, sechzehn, siebzehn, achtzehn, neunzehn, zwanzig oder mehr Kanten bzw. zwei, drei, vier, fünf, sechs, sieben, acht neun, zehn, elf, zwölf, dreizehn, vierzehn, fünfzehn, sechzehn, siebzehn, achtzehn, neunzehn, zwanzig oder mehr Ecken sind ebenfalls realisierbar und erfindungsgemäß bevorzugt. Weitere realisierbare und in alternativen Ausführungsformen des erfindungsgemäßen Verfahrens bevorzugte Aufnahmekammern weisen einen kuppelförmigen Aufbau auf. Die Seitenwände der Aufnahmekammern sind vorzugsweise planar. Räumlich gegenüberliegende Seitenwände können sowohl parallel als auch nicht parallel zueinander angeordnet sein. Die Grundfläche der Aufnahmekammern kann konvex, konkav oder planar sein, wobei planare Grundflächen bevorzugt sind. Die Grundfläche selbst kann als Kreis ausgestattet, kann aber auch Ecken aufweisen. Grundflächen mit einer Ecke (Tropfenform), zwei, drei, vier, fünf, sechs, sieben, acht, neun, zehn, elf, zwölf, dreizehn, vierzehn, fünfzehn, sechzehn, siebzehn, achtzehn, neunzehn, zwanzig oder mehr Ecken sind im Rahmen der vorliegenden Anmeldung bevorzugt. Der Übergang der Grundfläche zu der oder den Seitenwänden bzw. der Übergang der Seitenwände ineinander wird in bevorzugten Ausführungsformen dieser Anmeldung in abgerundeter Form ausgestattet. Die Aufnahmekammern weisen demnach nach außen keine spitzen oder scharfen sondern vielmehr abgerundete Kanten auf.

Ein bevorzugtes erfindungsgemäßes Verfahren ist demnach dadurch gekennzeichnet, daß die Grundflächen der Aufnahmekammern planar sind.

In einer besonders bevorzugten Ausführungsform des erfindungsgemäßen Verfahrens wird die in Schritt b) gebildete Aufnahmekammer vor, gleichzeitig mit oder nach dem Abkühlen befüllt.

Bevorzugter Gegenstand der vorliegenden Anmeldung ist folglich ein Verfahren zur Herstellung eines wasserlöslichen oder wasserdispergierbaren Behälters mit mindestens einer Aufnahmekammer, umfassend die Schritte:
a) Erwärmen eines ersten wasserlöslichen oder wasserdispergierbaren Hüllmaterials auf eine Temperatur T¹;
b) Verformen des Hüllmaterials unter Ausbildung einer Aufnahmekammer; durch Einformen des Hüllmaterials in eine Tiefziehmulde
c) Abkühlen des verformten Hüllmaterials auf eine Temperatur T² < T¹, wobei die in Schritt b) gebildete Aufnahmekammer vor, gleichzeitig mit oder nach dem Abkühlen befüllt wird:
d) Absenken des Bodens der Tiefziehmulde und Verformen des Hüllmaterials unter Vergrößerung mindestens einer der in Schritt b) gebildeten Aufnahmekammer.

In einer weiteren bevorzugten Ausführungsform erfolgt die Befüllung der Aufnahmekammer im Anschluß an das Verformen des Hüllmaterials in Schritt d). Erfindungsgemäße Verfahren, dadurch gekennzeichnet, dass die in Schritt d) gebildete vergrößerte Aufnahmekammer befüllt wird, sind im Rahmen der vorliegenden Anmeldung besonders bevorzugt.

Bevorzugter Gegenstand der vorliegenden Anmeldung ist daher ein Verfahren zur Herstellung eines wasserlöslichen oder wasserdispergierbaren Behälters mit mindestens einer Aufnahmekammer, umfassend die Schritte:
a) Erwärmen eines ersten wasserlöslichen oder wasserdispergierbaren Hüllmaterials auf eine Temperatur T¹;
b) Verformen des Hüllmaterials unter Ausbildung einer Aufnahmekammer; durch Einformen des Hüllmaterials in eine Tiefziehmulde
c) Abkühlen des verformten Hüllmaterials auf eine Temperatur T² < T¹;
d) Absenken des Bodens der Tietziehmulde und Verformen des Hüllmaterials unter Vergrößerung der in Schritt b) gebildeten Aufnahmekammer und Befüllen der vergrößerten Aufnahmekammer.

Selbstverständlich kann die Befullung der Aufnahmekammern auch sowohl im Anschluß an die Schritte b) und d) erfolgen. Erfindungsgemäße Verfahren zur Herstellung eines wasserlöslichen oder wasserdispergierbaren Behälters mit mindestens einer Aufnahmekammer, umfassend die Schritte:
a) Erwärmen eines ersten wasserlöslichen oder wasserdispergierbaren Hüllmaterials auf eine Temperatur T¹ ;
b) Verformen des Hüllmaterials unter Ausbildung einer Aufnahmekammer; durch Einformen des Hüllmaterials in eine Tiefziehmulde
c) Abkühlen des verformten Hüllmaterials auf eine Temperatur T² < T¹, wobei die in Schritt b) gebildete Aufnahmekammer vor, gleichzeitig mit oder nach dem Abkühlen befüllt wird;
d) Absenken des Bodens der Tiefziehmulde und Verformen des Hüllmaterials unter Vergrößerung der in Schritt b) gebildeten Aufnahmekammer und Befüllen der vergrößerten Aufnahmekammer.

Die Aktivsubstanzen oder Aktivsubstanzgemische können in fester oder flüssiger Form in die Aufnahmekammern verfüllt werden.

Werden sowohl im Schritt b) als auch im Schritt d) Aktivsubstanzen in die Aufnahmekammer verfüllt, so können sich diese Mittel selbstverständlich in ihrer Zusammensetzung und/oder in ihrem Aggregatzustand unterscheiden. In der Folge wird bezüglich der Aggregatzustände der einfüllbaren Aktivsubstanzen zwischen festen und flüssigen Mitteln unterschieden, wobei als Feststoffe im Rahmen der vorliegenden Anmeldung Aktivsubstanzen zusammengefaßt werden, welche eine feste, das heißt formstabile nicht fließfähige Konsistenz aufweisen. Unter diese Kategorie fallen beispielsweise Substanzen im festen Aggregatzustand, aber auch formstabile Substanzen wie formstabile Gele sowie Kombinationen dieser Substanzen. Weiterhin werden befüllte Körper mit einer festen Außenhülle als Feststoffe bezeichnet, und zwar unabhängig vom Aggregatzustand der in diesen befüllten Körpern enthaltenen Füllstoffe. Beispiele für derartige befüllte Körper sind beispielsweise flussigkeitsgefüllte Gelatinekapseln.

Als Feststoffe gelten im Rahmen der vorliegenden Anmeldung vorzugsweise Pulver und/oder Granulate und/oder Extrudate und/oder Kompaktate und/oder Gießkörper und zwar unabhängig davon, ob es sich um Reinsubstanzen oder um Substanzgemische handelt. Die genannten Feststoffe können dabei in amorpher und/oder kristalliner und/oder teilkristalliner Form vorliegen. Bevorzugte Feststoffe weisen im Rahmen der vorliegenden Erfindung einen Wassergehalt (beispielsweise bestimmbar als Trocknungsverlust oder nach Karl Fischer) unterhalb 7 Gew.-%, vorzugsweise unterhalb 4,5 Gew.-%, und besonders bevorzugt unterhalb 2 Gew.-% auf.

Pulver ist eine allgemeine Bezeichnung für eine Form der Zerteilung fester Stoffe und/oder Stoffgemische, die man durch Zerkleinern, das heißt Zerreiben oder Zerstoßen in der Reibschale (Pulverisieren), Mahlen in Mühlen oder als Folge von Zerstäubungs- oder Gefriertrocknungen erhält.

Eine besonders feine Zerteilung nennt man oft Atomisierung oder Mikronisierung; die entsprechenden Pulver werden als Mikro-Pulver bezeichnet. Bevorzugte Pulver weisen eine gleichmäßige (homogene) Mischungen der festen feinzerteilten Bestandteile auf und neigen im Falle von Stoffgemischen insbesondere nicht zur Auftrennung in Einzelbestandteile dieser Gemische. Im Rahmen der vorliegenden Anmeldung besonders bevorzugte Pulver weisen daher eine Teilchengrößeverteilung auf, in der mindestens 80 Gew.-%, vorzugsweise mindestens 60 Gew.-%, besonders bevorzugt mindestens 95 Gew.-% und insbesondere mindestens 99 Gew.-% des Pulvers, jeweils bezogen auf dessen Gesamtgewicht, zu maximal 80 %, vorzugsweise maximal 60 % und insbesondere maximal 40 % von der mittleren Teilchengröße dieses Pulvers abweichen.

Nach der Korngröße ist eine grobe Einteilung der Pulver in Grob-, Fein- u. Feinst-Pulver üblich; eine genauere Klassifizierung pulverförmiger Schüttgüter erfolgt über ihre Schüttdichte und durch Siebanalyse. Grundsätzlich lassen sich Pulver jeglicher Partikelgröße einsetzen, bevorzugte Pulver weisen jedoch mittlere Partikelgrößen von 40 bis 500 µm, vorzugsweise von 60 bis 400 µm und insbesondere von 100 bis 300 µm auf. Methoden zur Bestimmung der mittleren Teilchengröße stützen sich gewöhnlich auf die vorgenannte Siebanalyse und sind im Stand der Technik ausführlich beschrieben.

Dem unerwünschten Zusammenbacken der Pulver kann man durch Verwendung von Rieselhilfen bzw. Pudermitteln begegnen. In einer bevorzugten Ausführungsform enthalten die in den nach dem erfindungsgemäßen Verfahren hergestellten Pulver daher Rieselhilfen bzw. Pudermittel, vorzugsweise in Gewichtsanteilen von 0,1 bis 4 Gew.-%, besonders bevorzugt von 0,2 bis 3 Gew.-% und insbesondere von 0,3 bis 2 Gew.-%, jeweils bezogen auf das Gesamtgewicht des Pulvers. Bevorzugte Rieselhilfen bzw. Pudermittel sind, vorzugsweise in feinst vermahlener Form, Silikate und/oder Siliciumoxid und/oder Harnstoff.

Als partikuläre Gemische lassen sich Pulver durch eine Reihe von Techniken agglomerieren. Jede der im Stand der Technik zur Agglomeration von partikulären Gemischen bekannte Methode ist dabei prinzipiell geeignet, die in den erfindungsgemäß hergestellten Behältern umschlossenen Feststoffe in größere Aggregate zu überführen. Im Rahmen der vorliegenden Erfindung bevorzugt als Feststoff(e) eingesetzte Agglomerate sind neben den Granulaten die Kompaktate und Extrudate.

Als Granulate werden Anhäufungen von Granulatkörnchen bezeichnet. Ein Granulatkorn (Granalie) ist ein asymmetrisches Aggregat aus Pulverpartikeln. Granulationsverfahren sind im Stand der Technik breit beschrieben. Granulate können durch Feuchtgranulierung, durch Trockengranulierung bzw. Kompaktierung und durch Schmelzerstarrungsgranulierung hergestellt werden.

Die gebräuchlichste Granuliertechnik ist die Feuchtgranulierung, da diese Technik den wenigsten Einschränkungen unterworfen ist und am sichersten zu Granulaten mit günstigen Eigenschaften führt. Die Feuchtgranulierung erfolgt durch Befeuchtung der Pulvermischungen mit Lösungsmitteln und/oder Lösungsmittelgemischen und/oder Lösungen von Bindemitteln und/oder Lösungen von Klebstoffen und wird vorzugsweise in Mischern, Wirbelbetten oder Sprühtürmen durchgeführt, wobei besagte Mischer beispielsweise mit Rühr- und Knetwerkzeugen ausgestattet sein können. Für die Granulation sind jedoch auch Kombinationen von Wirbelbett(en) und Mischer(n), bzw. Kombinationen verschiedener Mischer einsetzbar. Die Granulation erfolgt abhängig vom Ausgangsmaterial sowie den gewünschten Produkteigenschaften unter Einwirkung niedriger bis hoher Scherkräfte.

Erfolgt die Granulation in einem Sprühturm so können als Ausgangsstoffe beispielsweise Schmelzen (Schmelzerstarrung) oder, vorzugsweise wässrige, Aufschlämmungen (Sprühtrocknung) fester Substanzen eingesetzt werden, welche an der Spitze eines Turmes in definierter Tröpfchengröße eingesprüht werden, im freien Fall erstarren bzw. trocknen und am Boden des Turmes als Granulat anfallen. Die Schmelzerstarrung eignet sich im allgemeinen besonders zur Formgebung niedrigschmelzender Stoffe, die im Bereich der Schmelztemperatur stabil sind (z. B. Harnstoff, Ammoniumnitrat u. diverse Formulierungen wie Enzymkonzentrate, Arzneimittel etc.), die entsprechenden Granulate werden auch als Prills bezeichnet. Die Sprühtrocknung wird besonders für die Herstellung von Waschmitteln oder Waschmittelbestandteilen eingesetzt.

Weitere im Stand der Technik beschriebene Agglomerationstechniken sind die Extruder- oder Lochwalzengranulierungen, bei denen optional mit Granulierflüssigkeit versetzte Pulvergemische beim Verpressen durch Lochscheiben (Extrusion) oder auf Lochwalzen plastisch verformt werden. Die Produkte der Extrudergranulierung werden auch als Extrudate bezeichnet.

Kompaktate lassen sich beispielsweise durch Trockengranulationstechniken wie die Tablettierung oder Walzenkompaktierung herstellen. Durch die Kompaktierung in Tablettenpressen können ein-oder mehrphasige Tabletten oder Briketts hergestellt werden. Zu den mehrphasigen Tabletten zählen neben den Mehrschicht- oder Sandwichtabletten beispielsweise auch die Manteltabletten und die Punkttabletten (Bull-eye-Tabletten). Die Briketts können ebenso wie die in Kompaktierwalzen erzeugten Schülpen im Anschluß an die Kompaktierung durch gegenläufige Stachelwalzen zerkleinert oder durch Siebe geschlagen werden.

Als Gießkörper werden im Rahmen der vorliegenden Anmeldung feste Substanzpartikel bezeichnet, welche durch Erstarrung und/oder Kristallisation aus Schmelzen oder Lösungen hergestellt werden. Die Erstarrung und/oder Kristallisation erfolgt bevorzugt in vorgefertigten Matrizen. Die nach Erstarrung aus den Matrizen gelösten Gießkörper können im Anschluß je nach Größe der Matrize und Verwendungszweck des Gießkörpers in ihrer ursprünglichen Größe oder gegebenenfalls nach Zerkleinerung als Feststoffe eingesetzt werden.

In einer besonders bevorzugten Ausführungsform des erfindungsgemäßen Verfahrens werden in den Schritten b) und d) unterschiedliche Feststoffe in die Aufnahmekammer verfüllt. Mit besonderem Vorzug unterscheiden sich die in den Schritten b) und d) verfüllten Feststoffe dabei insbesondere auch hinsichtlich der Art und/oder der Menge des in ihnen enthaltenen Farbstoffes.

In Abhängigkeit von der chemischen Zusammensetzung oder der Konfektionsform der verfüllten Aktivsubstanzen oder Aktivsubstanzgemische kann es vorteilhaft sein, die befüllten Aufnahmekammern zu versiegeln. Erfindungsgemäße Verfahren, bei denen die befüllte Aufnahmekammer versiegelt wird, sind im Rahmen der vorliegenden Anmeldung daher besonders bevorzugt.

Die Versiegelung der Aufnahmekammer und die haftende Verbindung des Hüllmaterials der Aufnahmekammer mit dem Siegelmaterial erfolgt dabei vorzugsweise durch Einwirkung von Druck und/oder Wärme und/oder Lösungsmittel. Mit besonderem Vorzug werden als Siegelmaterialein wasserlösliche oder wasserdispergierbare Materialien, vorzugsweise wasserlösliche oder wasserdispergierbare Polymere, eingesetzt. Das zur Versiegelung eingesetzte Siegelmaterial kann mit dem im Schritt a) des erfindungsgemäßen Verfahrens eingesetzten Hüllmaterial identisch sein, kann sich jedoch auch sowohl in seiner Zusammensetzung oder seiner Dicke von diesem unterscheiden.

In einer bevorzugten Ausführungsform des erfindungsgemäßen Verfahrens wird die Oberfläche des Hüllmaterials und/oder des Siegelmaterials vor dem Versiegeln zunächst durch Lösungsmittel angelöst (im Falle wasserlöslicher Folien eignet sich hier insbesondere Wasser) und dann durch Einwirkung von Druck und/oder Hitze versiegelt. Geeignete Siegeltemperaturen für wasserlösliche Hüllmaterialien sind beispielsweise 120 bis 200°C, vorzugsweise Temperaturen im Bereich von 130 bis 170°C, insbesondere im Bereich von 140 bis 150°C. Als Siegeldruck haben sich Drucke im Bereich von 250 bis 800 kPa, vorzugsweise 272 bis 554 kPa, besonders bevorzugt von 341 bis 481 kPa als vorteilhaft erwiesen. Die Siegelzeiten betragen vorzugsweise mindestens 0,3 Sekunden, vorzugsweise zwischen 0,4 und 4 Sekunden. Siegeltemperaturen, -drucke und Siegelzeiten werden neben dem eingesetzten Hüllmaterial auch durch die eingesetzte Siegelmaschine bestimmt. Die Siegelnähte weisen in einem bevorzugten erfindungsgemäßen Verfahren eine Breite zwischen 0,5 und 7 mm, vorzugsweise zwischen 1,0 und 6 mm und insbesondere zwischen 1,5 und 5 mm auf. Als ausreichend haltbar haben sich insbesondere Siegelnähte mit einer Breite oberhalb 2 mm, vorzugsweise oberhalb 2,5 mm, besonders bevorzugt oberhalb 3 mm und insbesondere oberhalb 3,5 mm erwiesen. Da die Breite der Siegelnaht produktionsabhängig auch bei einer einzelnen Verpackung schwanken kann, beziehen sich die vorgenannten Angaben über die Breite der Siegelnaht auf die bei einer Einzelverpackung gemessen minimale Nahtbreite. Eine Versiegelung findet insbesondere dann statt, wenn das Füllgut flüssig oder fließfähig ist. Beispiele für derartige Füllgüter sind Flüssigkeiten, Gele oder partikuläre Feststoffe wie Pulver.

Durch die Versiegelung der Aufnahmekammern läßt sich nicht nur ein Kontakt der eingefüllten Aktivstoffe oder Aktivstoffgemische miteinander oder mit der umgebenden Atmosphäre (Bsp. Luftsauerstoff, Luftfeuchte) oder ein Hautkontakt mit dem Verbraucher vermeiden, die Versiegelung ermöglicht vielmehr durch die Wahl geeigneter Siegelmaterialien gleichzeitig zudem eine Steuerung der Freisetzung der innerhalb des versiegelten Hohlraums befindlichen Aktivstoffe. Ein Beispiel für eine solche Steuerung ist der Einsatz wasserlöslicher oder wasserdispergierbarer Siegel- und/oder Hüllmaterialien mit unterschiedlichen Löslichkeiten mit dem Ziel den Inhalt einzelner Aufnahmekammern in zeitlich definierter Reihenfolge in das umgebende wässrige Medium freizusetzen. Realisierbar sind dabei im Rahmen der vorliegenden Anmeldung Verfahren, in welchen es sich bei den eingesetzten Hüllmaterialien sowie den zur Versiegelung der Aufnahmekammern eingesetzten Siegelmaterialien um die gleichen oder um unterschiedliche Materialien handelt. In einer bevorzugten Ausführungsform sind Hüllmaterial und Siegelmaterial in ihrer Zusammensetzung identisch. Diese Ausführungsform ermöglicht die gleichzeitige Freisetzung der unter den Siegelflächen befindlichen Follgüter. In einer weiteren bevorzugten Ausführungsform unterscheiden sich die zur Versiegelung der Aufnahmekammern eingesetzten Materialien.

In einer bevorzugten Ausführungsform des erfindungsgemäßen Verfahrens wird die Aufnahmekammer vor dem erneuten Verformen des Hüllmaterials in Schritt d) versiegelt. Erfindungsgemäße Verfahren zur Herstellung eines wasserlöslichen oder wasserdispergierbaren Behälters mit mindestens einer Aufnahmekammer, umfassend die Schritte:
a) Erwärmen eines ersten wasserlöslichen oder wasserdispergierbaren Hüllmaterials auf eine Temperatur T¹;
b) Verformen des Hüllmaterials unter Ausbildung einer Aufnahmekammer; durch Einformen des Hüllmaterials in eine Tiefziehmulde
c) Abkühlen des verformten Hüllmaterials auf eine Temperatur T² < T¹, wobei die in Schritt b) gebildete Aufnahmekammer vor, gleichzeitig mit oder nach dem Abkühlen befüllt und im Anschluß an die Befüllung versiegelt wird;
d) Absenken des Bodens der Tiefziehmulde und Verformen des Hüllmaterials unter Vergrößerung der in Schritt b) gebildeten Aufnahmekammer und Befüllen der vergrößerten Aufnahmekammer;
   sind im Rahmen der vorliegenden Anmeldung besonders bevorzugt.

Besonders bevorzugt sind insbesondere solche erfindungsgemäßen Verfahren zur Herstellung eines wasserlöslichen oder wasserdispergierbaren Behälters mit mindestens einer Aufnahmekammer, umfassend die Schritte:
a) Erwärmen eines ersten wasserlöslichen oder wasserdispergierbaren Hüffmaterials auf eine Temperatur T¹;
b) Verformen des Hüllmaterials unter Ausbildung einer Aufnahmekammer durch Tiefziehen des Hüllmaterials in eine Tiefziehmulde;
c) Abkühlen des verformten Hüllmaterials auf eine Temperatur T² < T¹, wobei die in Schritt b) gebildete Aufnahmekammer vor, gleichzeitig mit oder nach dem Abkühlen mit einem Feststoff befüllt und im Anschluß an die Befüllung versiegelt wird;
d) Verformen des Hüllmaterials unter Vergrößerung der in Schritt b) gebildeten Aufnahmekammer, vorzugsweise durch Absenken des Bodens der Tiefziehmulde aus Schritt b), und Befüllen der vergrößerten Aufnahmekammer mit einer Flüssigkeit;
   sind im Rahmen der vorliegenden Anmeldung besonders bevorzugt.

In einer weiteren bevorzugten Ausführungsform des erfindungsgemäßen Verfahrens wird die Aufnahmekammer sowohl nach jeder Befüllung versiegelt. Verfahren zur Herstellung eines wasserlöslichen oder wasserdispergierbaren Behälters mit mindestens einer Aufnahmekammer, umfassend die Schritte:
a) Erwärmen eines ersten wasserlöslichen oder wasserdispergierbaren Hüllmaterials auf eine Temperatur T¹;
b) Verformen des Hüllmaterials unter Ausbildung einer Aufnahmekammer; durch Einformen des Hüllmaterials in eine Tiefziehmulde
c) Abkühlen des verformten Hüllmaterials auf eine Temperatur T² < T¹, wobei die in Schritt b) gebildete Aufnahmekammer vor, gleichzeitig mit oder nach dem Abkühlen befüllt und im Anschluß an die Befüllung versiegelt wird;
d) Absenken des Bodens der Tiefziehmulde und Verformen des Hüllmaterials unter Vergrößerung der in Schritt b) gebildeten Aufnahmekammer und Befüllen der vergrößerten Aufnahmekammer, wobei die Aufnahmekammer im Anschluß an diese Befüllung erneut versiegelt wird;
   sind im Rahmen der vorliegenden Anmeldung besonders bevorzugt.

Bevorzugt ist weiterhin ein Verfahren zur Herstellung eines wasserlöslichen oder wasserdispergierbaren Behälters mit mindestens einer Aufnahmekammer, umfassend die Schritte:
a) Erwärmen eines ersten wasserlöslichen oder wasserdispergierbaren Hüllmaterials auf eine Temperatur T¹;
b) Verformen des Hüllmaterials unter Ausbildung einer Aufnahmekammer; durch Einformen des Hüllmaterials in eine Tiefziehmulde
c) Abkühlen des verformten Hüllmaterials auf eine Temperatur T² < T¹;
d) Absenken des Bodens der Tiefziehmulde und Verformen des Hüllmaterials unter Vergrößerung der in Schritt b) gebildeten Aufnahmekammer und teilweises Befüllen der vergrößerten Aufnahmekammer, wobei die Befüllung vorzugsweise mit einem Feststoff erfolgt;
e) Versiegeln der teilweise befüllten Aufnahmekammer und Befüllen des Restvolumens der Aufnahmekammer, wobei die Befüllung vorzugsweise mit einer Flüssigkeit erfolgt und im Anschluß an diese Befüllung erneut versiegelt wird;

Als Endprodukte der zuvor beschriebenen bevorzugten Verfahren mit Versiegelung werden wasserlösliche oder wasserdispergierbare Behälter erhalten, deren Aufnahmekammer durch eine Versiegelung in zwei voneinander getrennte Bereiche unterteilt ist, wobei diese Bereiche mit vorzugsweise unterschiedlichen Füllgütern befüllt sind. Die nachfolgende Tabelle gibt eine Übersicht über eine Reihe im Rahmen der vorliegenden Anmeldung besonders bevorzugter Konstellationen:

**Behälter mit zwei unterschiedlichen Füllgütern**

| Füllgut 1 | Füllgut 2 |
|---|---|
| Flüssigkeit | Flüssigkeit |
| Flüssigkeit | Pulver |
| Flüssigkeit | Granulat |
| Flüssigkeit | Kompaktat |
| Flüssigkeit | Extrudat |
| Flüssigkeit | Gießkörper |
| Flüssigkeit | Formstabiles Gel |
| Pulver | Flüssigkeit |
| Pulver | Pulver |
| Pulver | Granulat |
| Pulver | Kompaktat |
| Pulver | Extrudat |
| Pulver | Gießkörper |
| Pulver | Formstabiles Gel |
| Granulat | Flüssigkeit |
| Granulat | Pulver |
| Granulat | Granulat |
| Granulat | Kompaktat |
| Granulat | Extrudat |
| Granulat | Gießkörper |
| Granulat | Formstabiles Gel |
| Kompaktat | Flüssigkeit |
| Kompaktat | Pulver |
| Kompaktat | Granulat |
| Kompaktat | Kompaktat |
| Kompaktat | Extrudat |
| Kompaktat | Gießkörper |
| Kompaktat | Formstabiles Gel |
| Extrudat | Flüssigkeit |
| Extrudat | Pulver |
| Extrudat | Granulat |
| Extrudat | Kompaktat |
| Extrudat | Extrudat |
| Extrudat | Gießkörper |
| Extrudat | Formstabiles Gel |
| Gießkörper | Flüssigkeit |
| Gießkörper | Pulver |
| Gießkörper | Granulat |
| Gießkörper | Kompaktat |
| Gießkörper | Extrudat |
| Gießkörper | Gießkörper |
| Gießkörper | Formstabiles Gel |
| Formstabiles Gel | Flüssigkeit |
| Formstabiles Gel | Pulver |
| Formstabiles Gel | Granulat |
| Formstabiles Gel | Kompaktat |
| Formstabiles Gel | Extrudat |
| Formstabiles Gel | Gießkörper |
| Formstabiles Gel | Formstabiles Gel |

In dem erfindungsgemäßen Verfahren werden wasserlösliche oder wasserdispergierbare Hullmaterialien zu wasserlöslichen oder wasserdispergierbaren Behältern verarbeitet. In einer bevorzugten Verfahrensvariante wird als wasserlösliches oder wasserdispergierbares Hüllmaterial ein wasserlösliches oder wasserdispergierbares Polymer, vorzugsweise eine Polymerfolie, eingesetzt.

Einige besonders bevorzugte wasserlösliche oder wasserdispergierbare Hüllmaterialien, welche sich sowohl zur Herstellung der Aufnahmekammern, als auch zu deren Versiegelung eignen sind in der Folge aufgeführt. Die genannten Polymere können dabei sowohl allein, als auch in Kombination miteinander oder in Kombination mit weiteren Substanzen, beispielsweise Weichmachern oder Lösungsvermittlern als Siegel- oder Hüllmaterial eingesetzt werden.

Wasserlösliche Polymere im Sinne der Erfindung sind solche Polymere, die bei Raumtemperatur in Wasser zu mehr als 2,5 Gew.-% löslich sind.

Bei dem in dem erfindungsgemäßen Verfahren eingesetzte Hallmaterial handelt es sich vorzugsweise mindestens anteilsweise um eine Substanz aus der Gruppe (acetalisierter) Polyvinylalkohol, Polyvinylpyrrolidon, Polyethylenoxid, Gelatine.

In einer bevorzugten Verfahrensvariante umfaßt der Behälter ein oder mehrere wasserlösliche(s) Polymer(e), vorzugsweise ein Material aus der Gruppe (gegebenenfalls acetalisierter) Polyvinylalkohol (PVAL), Polyvinylpyrrolidon, polyethylenoxid, Gelatine, Cellulose, und deren Derivate und deren Mischungen.

"Polyvinylalkohole" (Kurzzeichen PVAL, gelegentlich auch PVOH) ist dabei die Bezeichnung für Polymere der allgemeinen Struktur 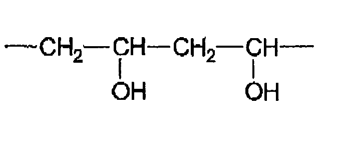 die in geringen Anteilen (ca. 2%) auch Struktureinheiten des Typs 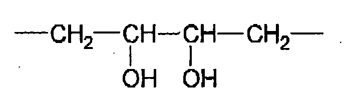 enthalten.

Handelsübliche Polyvinylalkohole, die als weiß-gelbliche Pulver oder Granulate mit Polymerisationsgraden im Bereich von ca. 100 bis 2500 (Molmassen von ca. 4000 bis 100.000 g/mol) angeboten werden, haben Hydrolysegrade von 98-99 bzw. 87-89 Mol-%, enthalten also noch einen Restgehalt an Acetyl-Gruppen. Charakterisiert werden die Polyvinylalkohole von Seiten der Hersteller durch Angabe des Polymerisationsgrades des Ausgangspolymeren, des Hydrolysegrades, der Verseifungszahl bzw. der Lösungsviskosität.

Polyvinylalkohole sind abhängig vom Hydrolysegrad löslich in Wasser und wenigen stark polaren organischen Lösungsmitteln (Formamid, Dimethylformamid, Dimethylsulfoxid); von (chlorierten) Kohlenwasserstoffen, Estern, Fetten und Ölen werden sie nicht angegriffen. Polyvinylalkohole werden als toxikologisch unbedenklich eingestuft und sind biologisch zumindest teilweise abbaubar. Die Wasserlöslichkeit kann man durch Nachbehandlung mit Aldehyden (Acetalisierung), durch Komplexierung mit Ni- oder Cu-Salzen oder durch Behandlung mit Dichromaten, Borsäure od. Borax verringern. Die Beschichtungen aus Polyvinylalkohol sind weitgehend undurchdringlich für Gase wie Sauerstoff, Stickstoff, Helium, Wasserstoff, Kohlendioxid, lassen jedoch Wasserdampf hindurchtreten.

Im Rahmen der vorliegenden Erfindung ist es bevorzugt, daß das in dem erfindungsgemäßen Verafahren eingesetzte Hüllmaterial wenigstens anteilsweise einen Polyvinylalkohol umfaßt, dessen Hydrolysegrad 70 bis 100 Mol-%, vorzugsweise 80 bis 90 Mol-%, besonders bevorzugt 81 bis 89 Mol-% und insbesondere 82 bis 88 Mol-% beträgt. In einer bevorzugten Ausführungsform besteht das in dem erfindungsgemäßen Verfahren eingesetzte erste Hüllmaterial zu mindestens 20 Gew.-%, besonders bevorzugt zu mindestens 40 Gew.-%, ganz besonders bevorzugt zu mindestens 60 Gew.-% und insbesondere zu mindestens 80 Gew.-% aus einem Polyvinylalkohol umfaßt, dessen Hydrolysegrad 70 bis 100 Mol-%, vorzugsweise 80 bis 90 Mol-%, besonders bevorzugt 81 bis 89 Mol-% und insbesondere 82 bis 88 Mol-% beträgt.

Vorzugsweise werden als Materialien für die Behälter Polyvinylalkohole eines bestimmten Molekulargewichtsbereichs eingesetzt, wobei erfindungsgemäß bevorzugt ist, daß das Hüllmaterial einen Polyvinylalkohol umfaßt, dessen Molekulargewicht im Bereich von 10.000 bis 100.000 gmol⁻¹, vorzugsweise von 11.000 bis 90.000 gmol⁻¹, besonders bevorzugt von 12.000 bis 80.000 gmol⁻¹ und insbesondere von 13.000 bis 70.000 gmol⁻¹ liegt.

Der Polymerisationsgrad solcher bevorzugten Polyvinylalkohole liegt zwischen ungefähr 200 bis ungefähr 2100, vorzugsweise zwischen ungefähr 220 bis ungefähr 1890, besonders bevorzugt zwischen ungefähr 240 bis ungefähr 1680 und insbesondere zwischen ungefähr 260 bis ungefähr 1500.

Die vorstehend beschriebenen Polyvinylalkohole sind kommerziell breit verfügbar, beispielsweise unter dem Warenzeichen Mowiol^{®} (Clariant). Im Rahmen der vorliegenden Erfindung besonders geeignete Polyvinylalkohole sind beispielsweise Mowiol^{®} 3-83, Mowiol^{®} 4-88, Mowiol^{®} 5-88 sowie Mowiol^{®} 8-88.

Weitere als Hüllmaterial besonders geeignete Polyvinylalkohole sind der nachstehenden Tabelle zu entnehmen:

| Bezeichnung | **Hydrolysegrad [%]** | **Molmasse [kDa]** | **Schmelzpunkt [°C]** |
|---|---|---|---|
| Airvol^{®} 205 | 88 | 15-27 | 230 |
| Vinex^{®} 2019 | 88 | 15 - 27 | 170 |
| Vinex^{®} 2144 | 88 | 44 - 65 | 205 |
| Vinex^{®} 1025 | 99 | 15 - 27 | 170 |
| Vinex^{®} 2025 | 88 | 25 - 45 | 192 |
| Gohsefimer^{®} 5407 | 30 - 28 | 23.600 | 100 |
| Gohsefimer^{®} LL02 | 41 - 51 | 17.700 | 100 |

Weitere als Hüllmaterial geeignete Polyvinylalkohole sind ELVANOL^{®} 51-05, 52-22, 50-42, 85-82, 75-15, T-25, T-66, 90-50 (Warenzeichen der Du Pont), ALCOTEX^{®} 72.5, 78, B72, F80/40, F88/4, F88/26, F88/40, F88/47 (Warenzeichen der Harlow Chemical Co.), Gohsenol^{®} NK-05, A-300, AH-22, C-500, GH-20, GL-03, GM-14L, KA-20, KA-500, KH-20, KP-06, N-300, NH-26, NM11Q, KZ-06 (Warenzeichen der Nippon Gohsei K.K.).

Die Wasserlöslichkeit von PVAL kann durch Nachbehandlung mit Aldehyden (Acetalisierung) oder Ketonen (Ketalisierung) verändert werden. Als besonders bevorzugt und aufgrund ihrer ausgesprochen guten Kaltwasserlöslichkeit besonders vorteilhaft haben sich hierbei Polyvinylalkohole herausgestellt, die mit den Aldehyd bzw. Ketogruppen von Sacchariden oder Polysacchariden oder Mischungen hiervon acetalisiert bzw. ketalisiert werden. Als äußerst vorteilhaft einzusetzen sind die Reaktionsprodukte aus PVAL und Stärke.

Weiterhin läßt sich die Wasserlöslichkeit durch Komplexierung mit Ni- oder Cu-Salzen oder durch Behandlung mit Dichromaten, Borsäure, Borax verändern und so gezielt auf gewünschte Werte einstellen. Folien aus PVAL sind weitgehend undurchdringlich für Gase wie Sauerstoff, Stickstoff, Helium, Wasserstoff, Kohlendioxid, lassen jedoch Wasserdampf hindurchtreten.

Beispiele geeigneter wasserlöslicher PVAL-Folien sind die unter Bezeichnung "SOLUBLON^{®} von der Firma Syntana Handelsgesellschaft E. Harke GmbH & Co. erhältlichen PVAL-Folien. Deren Löslichkeit in Wasser läßt sich Grad-genau einstellen, und es sind Folien dieser Produktreihe erhältlich, die in allen für die Anwendung relevanten Temperaturbereichen in wäßriger Phase löslich sind.

Polyvinylpyrrolidone, kurz als PVP bezeichnet, lassen sich durch die folgende allgemeine Formel beschreiben:

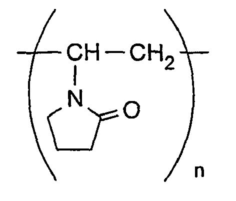

PVP werden durch radikalische Polymerisation von 1-Vinylpyrrolidon hergestellt. Handelsübliche PVP haben Molmassen im Bereich von ca. 2.500 bis 750.000 g/mol und werden als weiße, hygroskopische Pulver oder als wäßrige Lösungen angeboten.

### Polyethylenoxide, kurz PEOX, sind Polyalkylenglykole der allgemeinen Formel

H-[O-CH₂-CH₂]ₙ-OH

die technisch durch basisch katalysierte Polyaddition von Ethylenoxid (Oxiran) in meist geringe Mengen Wasser enthaltenden Systemen mit Ethylenglykol als Startmolekül hergestellt werden. Sie haben Molmassen im Bereich von ca. 200 bis 5.000.000 g/mol, entsprechend Polymerisationsgraden n von ca. 5 bis >100.000. Polyethylenoxide besitzen eine äußerst niedrige Konzentration an reaktiven Hydroxy-Endgruppen und zeigen nur noch schwache Glykol-Eigenschaften.

Gelatine ist ein Polypeptid (Molmasse: ca. 15.000 bis >250.000 g/mol), das vornehmlich durch Hydrolyse des in Haut und Knochen von Tieren enthaltenen Kollagens unter sauren oder alkalischen Bedingungen gewonnen wird. Die Aminosäuren-Zusammensetzung der Gelatine entspricht weitgehend der des Kollagens, aus dem sie gewonnen wurde, und variiert in Abhängigkeit von dessen Provenienz. Die Verwendung von Gelatine als wasserlösliches Hüllmaterial ist insbesondere in der Pharmazie in Form von Hart- oder Weichgelatinekapseln äußerst weit verbreitet. In Form von Folien findet Gelatine wegen ihres im Vergleich zu den vorstehend genannten Polymeren hohen Preises nur geringe Verwendung.

Bevorzugt sind im Rahmen des erfindungsgemäßen Verfahrens Hüllmaterialien, welche ein Polymer aus der Gruppe Stärke und Stärkederivate, Cellulose und Cellulosederivate, insbesondere Methylcellulose und Mischungen hieraus umfassen.

Stärke ist ein Homoglykan, wobei die Glucose-Einheiten α-glykosidisch verknüpft sind. Stärke ist aus zwei Komponenten unterschiedlichen Molekulargewichts aufgebaut: aus ca. 20 bis 30% geradkettiger Amylose (MG. ca. 50.000 bis 150.000) und 70 bis 80% verzweigtkettigem Amylopektin (MG. ca. 300.000 bis 2.000.000). Daneben sind noch geringe Mengen Lipide, Phosphorsäure und Kationen enthalten. Während die Amylose infolge der Bindung in 1,4-Stellung lange, schraubenförmige, verschlungene Ketten mit etwa 300 bis 1.200 Glucose-Molekülen bildet, verzweigt sich die Kette beim Amylopektin nach durchschnittlich 25 Glucose-Bausteinen durch 1,6-Bindung zu einem astähnlichen Gebilde mit etwa 1.500 bis 12.000 Molekülen Glucose. Neben reiner Stärke sind zur Herstellung wasserlöslicher Umhüllungen der Waschmittel-, Spülmittel- und Reinigungsmittel-Portionen im Rahmen der vorliegenden Erfindung auch Stärke-Derivate geeignet, die durch polymeranaloge Reaktionen aus Stärke erhältlich sind. Solche chemisch modifizierten Stärken umfassen dabei beispielsweise Produkte aus Veresterungen bzw. Veretherungen, in denen Hydroxy-Wasserstoffatome substituiert wurden. Aber auch Stärken, in denen die Hydroxy-Gruppen gegen funktionelle Gruppen, die nicht über ein Sauerstoffatom gebunden sind, ersetzt wurden, lassen sich als Stärke-Derivate einsetzen. In die Gruppe der Stärke-Derivate fallen beispielsweise Alkalistärken, Carboxymethylstärke (CMS), Stärkeester und -ether sowie Aminostärken.

Reine Cellulose weist die formale Bruttozusammensetzung (C₆H₁₀O₅)ₙ auf und stellt formal betrachtet ein β-1,4-Polyacetal von Cellobiose dar, die ihrerseits aus zwei Molekülen Glucose aufgebaut ist. Geeignete Cellulosen bestehen dabei aus ca. 500 bis 5.000 Glucose-Einheiten und haben demzufolge durchschnittliche Molmassen von 50.000 bis 500.000. Als Desintegrationsmittel auf Cellulosebasis verwendbar sind im Rahmen der vorliegenden Erfindung auch Cellulose-Derivate, die durch polymeranaloge Reaktionen aus Cellulose erhältlich sind. Solche chemisch modifizierten Cellulosen umfassen dabei beispielsweise Produkte aus Veresterungen bzw. Veretherungen, in denen Hydroxy-Wasserstoffatome substituiert wurden. Aber auch Cellulosen, in denen die Hydroxy-Gruppen gegen funktionelle Gruppen, die nicht über ein Sauerstoffatom gebunden sind, ersetzt wurden, lassen sich als Cellulose-Derivate einsetzen. In die Gruppe der Cellulose-Derivate fallen beispielsweise Alkalicellulosen, Carboxymethylcellulose (CMC), Celluloseester und -ether sowie Aminocellulosen.

Bevorzugte erfindungsgemäße Verfahren sind dadurch gekennzeichnet, daß mindestens eines der eingesetzten Hüllmaterialien transparent oder transluzent ist.

Das als Hüllmaterial oder als Siegelmaterial eingesetzte Material ist vorzugsweise transparent. Unter Transparenz ist im Sinne dieser Erfindung zu verstehen, daß die Durchlässigkeit innerhalb des sichtbaren Spektrums des Lichts (410 bis 800 nm) größer als 20%, vorzugsweise größer als 30%, äußerst bevorzugt größer als 40% und insbesondere größer als 50% ist. Sobald somit eine Wellenlänge des sichtbaren Spektrums des Lichtes eine Durchlässigkeit größer als 20% aufweist, ist es im Sinne der Erfindung als transparent zu betrachten.

Erfindungsgemäß hergestellte Behälter, zu deren Herstellung transparentes Hüllmaterial eingesetzt wurde, können ein Stabilisierungsmittel enthalten. Stabilisierungsmittel im Sinne der Erfindung sind Materialien, welche die in den Aufnahmekammern befindlichen Inhaltsstoffe vor Zersetzung oder Desaktivierung durch Lichteinstrahlung schützen. Als besonders geeignet haben sich hier Antioxidantien, UV-Absorber und Fluoreszensfarbstoffe erwiesen.

Besonders geeignete Stabilisierungsmittel im Sinne der Erfindung sind die Antioxidantien. Um unerwünschte, durch Lichteinstrahlung und damit radikalischer Zersetzung verursachte Veränderungen an den Formulierungen zu verhindern, können die Formulierungen Antioxidantien enthalten. Als Antioxidantien können dabei beispielsweise durch sterisch gehinderte Gruppen substituierte Phenole, Bisphenole und Thiobisphenole verwendet werden. Weitere Beispiele sind Propylgallat, Butylhydroxytoluol (BHT), Butylhydroxyanisol (BHA), t-Butylhydrochinon (TBHQ), Tocopherol und die langkettigen (C8-C22) Ester der Gallussäure, wie Dodecylgallat. Andere Substanzklassen sind aromatische Amine, bevorzugt sekundäre aromatische Amine und substituierte p-Phenylendiamine, Phosphorverbindungen mit dreiwertigem Phosphor wie Phosphine, Phosphite und Phosphonite, Zitronensäuren und Zitronensäurederivate, wie Isopropylcitrat, Endiol-Gruppen enthaltende Verbindungen, sogenannte Reduktone, wie die Ascorbinsäure und ihre Derivate, wie Ascorbinsäurepalmitat, Organoschwefelverbindungen, wie die Ester der 3,3'-Thiodipropionsäure mit C₁₋₁₈-Alkanolen, insbesondere C₁₀₋₁₈-Alkanolen, Metallionen-Desaktivatoren, die in der Lage sind, die Autooxidation katalysierende Metallionen, wie z.B. Kupfer, zu komplexieren, wie Nitrilotriessigsäure und deren Abkömmlinge und ihre Mischungen. Antioxidantien können in den Formulierungen in Mengen bis 35 Gew.-%, vorzugsweise bis 25 Gew.-%, besonders bevorzugt von 0,01 bis 20 und insbesondere von 0,03 bis 20 Gew.-% enthalten sein.

Eine weitere Klasse bevorzugt einsetzbarer Stabilisierungsmittel sind die UV-Absorber. UV-Absorber können die Lichtbeständigkeit der Rezepturbestandteile verbessern. Darunter sind organische Substanzen (Lichtschutzfilter) zu verstehen, die in der Lage sind, ultraviolette Strahlen zu absorbieren und die aufgenommene Energie in Form längerwelliger Strahlung, z.B. Wärme wieder abzugeben. Verbindungen, die diese gewünschten Eigenschaften aufweisen, sind beispielsweise die durch strahlungslose Desaktivierung wirksamen Verbindungen und Derivate des Benzophenons mit Substituenten in 2- und/oder 4-Stellung. Weiterhin sind auch substituierte Benzotriazole, wie beispielsweise das wasserlösliche Benzolsulfonsäure-3-(2H-benzotriazol-2-yl)-4-hydroxy-5-(methylpro-pyl)-mononatriumsalz (Cibafast^{®} H), in 3-Stellung Phenylsubstituierte Acrylate (Zimtsäurederivate), gegebenenfalls mit Cyanogruppen in 2-Stellung, Salicylate, organische Ni-Komplexe sowie Naturstoffe wie Umbelliferon und die körpereigene Urocansäure geeignet. Besondere Bedeutung haben Biphenyl- und vor allem Stilbenderivate, die kommerziell als Tinosorb^{®} FD oder Tinosorb^{®} FR ex Ciba erhältlich sind. Als UV-B-Absorber sind zu nennen 3-Benzylidencampher bzw. 3-Benzylidennorcampher und dessen Derivate, z.B. 3-(4-Methylbenzyliden)campher; 4-Aminobenzoesäurederivate, vorzugsweise 4-(Dimethylamino)benzoesäure-2-ethylhexylester, 4-(Dimethylamino)benzoesäure-2-octyl-ester und 4-(Dimethylamino)benzoesäureamylester; Ester der Zimtsäure, vorzugsweise 4-Methoxyzimtsäure-2-ethylhexylester, 4-Methoxyzimtsäurepropylester, 4-Methoxyzimt-säureisoamylester, 2-Cyano-3,3-phenylzimtsäure-2-ethylhexylester (Octocrylene); Ester der Salicylsäure, vorzugsweise Salicylsäure-2-ethylhexylester, Salicylsäure-4-isopropyl-benzylester, Salicylsäurehomomenthylester; Derivate des Benzophenons, vorzugsweise 2-Hydroxy-4-methoxybenzophenon, 2-Hydroxy-4-methoxy-4'-methylbenzophenon, 2,2'-Dihydroxy-4-methoxybenzophenon; Ester der Benzalmalonsäure, vorzugsweise 4-Methoxybenzmalonsäuredi-2-ethylhexylester; Triazinderivate, wie z.B. 2,4,6-Trianilino-(p-carbo-2'-ethyl-1'-hexyloxy)-1,3,5-triazin und Octyl Triazon oder Dioctyl Butamido Triazone (Uvasorb^{®} HEB); Propan-1,3-dione, wie z.B. 1-(4-tert.Butylphenyl)-3-(4'methoxy-phenyl)propan-1,3-dion; Ketotricyclo(5.2.1.0)decan-Derivate. Weiterhin geeignet sind 2-Phenylbenzimidazol-5-sulfonsäure und deren Alkali-, Erdalkali-, Ammonium-, Alkylammonium-, Alkanolammonium- und Glucammoniumsalze; Sulfonsäurederivate von Benzophenonen, vorzugsweise 2-Hydroxy-4-methoxybenzophenon-5-sulfonsäure und ihre Salze; Sulfonsäurederivate des 3-Benzylidencamphers, wie z.B. 4-(2-Oxo-3-bornylidenmethyl)benzolsulfonsäure und 2-Methyl-5-(2-oxo-3-bornyliden)sulfonsäure und deren Salze.

Als typische UV-A-Filter kommen insbesondere Derivate des Benzoylmethans in Frage, wie beispielsweise 1-(4'-tert.Butylphenyl)-3-(4'-methoxyphenyl)propan-1,3-dion, 4-tert.-Butyl-4'-methoxydibenzoylmethan (Parsol 1789), 1-Phenyl-3-(4'-isopropylphenyl)-propan-1,3-dion sowie Enaminverbindungen. Die UV-A und UV-B-Filter können selbstverständlich auch in Mischungen eingesetzt werden. Neben den genannten löslichen Stoffen kommen für diesen Zweck auch unlösliche Lichtschutzpigmente, nämlich feindisperse, vorzugsweise nanoisierte Metalloxide bzw. Salze in Frage. Beispiele für geeignete Metalloxide sind insbesondere Zinkoxid und Titandioxid und daneben Oxide des Eisens, Zirkoniums, Siliciums, Mangans, Aluminiums und Cers sowie deren Gemische. Als Salze können Silicate (Talk), Bariumsulfat oder Zinkstearat eingesetzt werden. Die Oxide und Salze werden in Form der Pigmente bereits für hautpflegende und hautschützende Emulsionen und dekorative Kosmetik verwendet. Die Partikel sollten dabei einen mittleren Durchmesser von weniger als 100 nm, vorzugsweise zwischen 5 und 50 nm und insbesondere zwischen 15 und 30 nm aufweisen. Sie können eine sphärische Form aufweisen, es können jedoch auch solche Partikel zum Einsatz kommen, die eine ellipsoide oder in sonstiger Weise von der sphärischen Gestalt abweichende Form besitzen. Die Pigmente können auch oberflächenbehandelt, d.h. hydrophilisiert oder hydrophobiert vorliegen. Typische Beispiele sind gecoatete Titandioxide, wie z.B. Titandioxid T 805 (Degussa) oder Eusolex^{®} T2000 (Merck). Als hydrophobe Coatingmittel kommen dabei vor allem Silicone und dabei speziell Trialkoxyoctylsilane oder Simethicone in Frage. Vorzugsweise wird mikronisieries Zinkoxid verwendet.

UV-Absorber können in Mengen bis 5 Gew.-%, vorzugsweise bis 3 Gew.-%, besonders bevorzugt von 0,01 bis 2,0 und insbesondere von 0,03 bis 1 Gew.-%, jeweils bezogen auf das Gesamtgewicht eines in einer Aufnahmekammer befindlichen Substanzgemisches, enthalten sein.

Eine weitere bevorzugt einzusetzende Klasse von Stabilisierungsmitteln sind die Fluoreszenzfarbstoffe. Zu ihnen zählen die 4,4'-Diamino-2,2'-stilbendisulfonsäuren (Flavonsäuren), 4,4'-Distyrylbiphenylen, Methyl-umbelliferone, Cumarine, Dihydrochinolinone, 1,3-Diarylpyrazoline, Naphthalsäureimide, Benzoxazol-, Benzisoxazol- und Benzimidazol-Systeme sowie der durch Heterocyclen substituierten Pyrenderivate. Von besonderer Bedeutung sind dabei die Sulfonsäuresalze der Diaminostilben-Derivate sowie polymere Fluoreszenzstoffe.

Fluoreszenzstoffe können, bezogen auf das Gesamtgewicht eines in einer Aufnahmekammer befindlichen Substanzgemisches, in in Mengen bis 5 Gew.-%, vorzugsweise bis 1 Gew.-%, besonders bevorzugt von 0,01 bis 0,5 und insbesondere von 0,03 bis 0,1 Gew.-% enthalten sein.

In einer bevorzugten Ausführungsform werden die vorgenannten Stabilisierungsmittel in beliebigen Mischungen eingesetzt. Die Stabilisierungsmittel werden, bezogen auf das Gesamtgewicht eines in einer Aufnahmekammer befindlichen Substanzgemisches, in Mengen bis 40 Gew.-%, vorzugsweise bis 30 Gew.-%, besonders bevorzugt von 0,01 bis 20 Gew.%, insbesondere von 0,02 bis 5 Gew.-% eingesetzt. Bei einem bevorzugten erfindungsgemäßen Verfahren besteht mindestens eines der eingesetzten Hüllmaterial(ien) aus einem wasserlöslichen oder wasserdispergierbaren Polymer, vorzugsweise einer Polymerfolie.

Bevorzugte Verfahrensvarianten sind dabei dadurch gekennzeichnet, daß die in Schritt a) des erfindungsgemäßen Verfahrens eingesetzte Folie eine Dicke von 5 bis 2000µm, vorzugsweise von 10 bis 1000µm, besonders bevorzugt von 15 bis 500 µm, ganz besonders bevorzugt von 20 bis 200 µm und insbesondere von 25 bis 100 µm aufweist.

Bei den eingesetzten Folien kann sich um ein- oder mehrschichtige Folien (Lamirlatfolien) handeln. Der Wassergehalt der Folien beträgt vorzugsweise unterhalb 10 Gew.%, besonders bevorzugt unterhalb 7 Gew.-%, ganz besonders bevorzugt unterhalb 5 Gew.-% und insbesondere unterhalb 4 Gew.-%.

Die nach dem erfindungsgemäßen Verfahren hergestellten wasserlöslichen oder wasserdispergierbaren Behälter eignen sich zur Verpackung unterschiedlichster Aktivsubstanzen. Erfindungsgemäße Verfahren, bei welchen die Aufnahmekammer(n) mit einer Aktivsubstanz oder einem Aktivsubstanzgemisch aus den Bereichen Pharmazeutika, Kosmetika, Futter-, Pflanzenschutz- oder Düngemittel, Klebstoffe und/oder Körperpflegemittel, vorzugsweise jedoch aus dem Bereich der wasch- und reinigungsaktiven Substanzen, befüllt wird/werden, sind im Rahmen der vorliegenden Anmeldung bevorzugt.

Die nach dem zuvor beschriebenen erfindungsgemäßen Verfahren hergestellten Mittel enthalten bevorzugt wasch- und reinigungsaktive Substanzen, vorzugsweise wasch- und reinigungsaktive Substanzen aus der Gruppe der Gerüststoffe, Tenside, Polymere, Bleichmittel, Bleichaktivatoren, Enzyme, Glaskorrosionsinhibitoren, Korrosionsinhibitoren, Desintegrationshilfsmittel, Duftstoffe und Parfümträger.

## Patentansprüche

1. Verfahren zur Herstellung eines wasserlöslichen oder wasserdispergierbaren Behälters mit mindestens einer Aufnahmekammer, umfassend die Schritte:
a) Erwärmen eines ersten wasserlöslichen oder wasserdispergierbaren Hüllmaterials auf eine Temperatur T¹;
b) Verformen des Hüllmaterials unter Ausbildung einer Aufnahmekammer durchEinformen des Hollmaterials in eine Tiefziehmulde;
c) Abkühlen des verformten Hüllmaterials auf eine Temperatur T² < T¹;
d) Absenken des Bodens der Tiefziehmulde und Verformen des Hüllmaterials unter Vergrößerung der in Schritt b) gebildeten Aufnahmekammer.

2. Verfahren nach Anspruch 1, **dadurch gekennzeichnet, dass** die Erwärmung des wasserlöslichen oder wasserdispergierbaren Hüllmaterials in Schritt a) durch Heißluft, durch Wärmestrahlung oder durch Kontakt mit einer Heizplatte erfolgt.

3. Verfahren nach einem der Ansprüche 1 oder 2, **dadurch gekennzeichnet, dass** die Temperatur T¹ mindestens 35 °C, vorzugsweise mindestens 40°C, bevorzugt mindestens 50°C, besonders bevorzugt mindestens 60°C und insbesondere mindestens 70°C beträgt.

4. Verfahren nach einem der Ansprüche 1 oder 2, **dadurch gekennzeichnet, dass** das Abkühlen des Hüllmaterial in Schritt c) durch Kaltluft oder durch Kontakt mit einer gekühlten Oberfläche erfolgt.

5. Verfahren nach einem der Ansprüche 1 bis 4, **dadurch gekennzeichnet, dass** die Temperatur T² mindestens 5°C, vorzugsweise mindestens 10°C, bevorzugt mindestens 20°C und insbesondere mindestens 40°C unterhalb der Temperatur T¹ liegt.

6. Verfahren nach einem der Ansprüche 1 bis 5, **dadurch gekennzeichnet, dass** das Volumen der Aufnahmekammer in Schritt b) mindestens 1 ml, vorzugsweise mindestens 2 ml, bevorzugt mindestens 4 ml und insbesondere mindestens 8 ml beträgt.

7. Verfahren nach einem der Ansprüche 1 bis 6, **dadurch gekennzeichnet, dass** das Verhältnis des Volumens der in Schritt d) erzeugten Aufnahmekammervolumens zu dem in Schritt b) erzeugten Aufnahmekammervolumen 10:1 bis 1:10, vorzugsweise 7:1 bis 1:5, bevorzugt 5:1 bis 1:13, besonders bevorzugt 4:1 bis 1:2 und insbesondere 3:1 bis 1:1 beträgt.

8. Verfahren nach einem der Ansprüche 1 bis 7, **dadurch gekennzeichnet, dass** eines der eingesetzten wasserlöslichen oder wasserdispergierbare Hüllmaterialien ein wasserlösliches oder wasserdispergierbares Polymer, vorzugsweise eine Polymerfolie, umfasst.

9. Verfahren nach einem der Ansprüche 1 bis 8, **dadurch gekennzeichnet, dass** die in Schritt b) gebildete Aufnahmekammer vor, gleichzeitig mit oder nach dem Abkühlen befüllt wird.

10. Verfahren nach einem der Ansprüche 1 bis 9, **dadurch gekennzeichnet, dass** die in Schritt d) gebildete vergrößerte Aufnahmekammer in einem nachfolgenden Schritt e) befüllt wird.

11. Verfahren nach einem der Ansprüche 9 oder 10, **dadurch gekennzeichnet, dass** die befüllte Aufnahmekammer versiegelt wird.

12. Verfahren nach einem der Anspruche 9 oder 10, **dadurch gekennzeichnet, dass** die Aufnahmekammer(n) mit einer Aktivsubstanz oder einem Aktivsubstanzgemisch aus den Bereichen Pharmazeutika, Kosmetika, Futter-, Pflanzenschutz- oder Düngemittel, Klebstoffe, Lebensmittel und/oder Körperpflegemittel, vorzugsweise jedoch aus dem Bereich der wasch- und reinigungsaktiven Substanzen, befüllt wird/werden.

## Claims

1. A method for producing a water-soluble or water-dispersible container with at least one holding chamber, comprising the steps of:
a) heating a first water-soluble or water-dispersible enveloping material to a temperature T¹,
b) deforming the enveloping material with formation of a holding chamber by molding the enveloping material in a deep-drawing cavity;
c) cooling the deformed enveloping material to a temperature T² < T¹.
d) lowering the bottom of the deep-drawing cavity and deforming the enveloping material with enlargement of the holding chamber formed in step b).

2. The method according to claim 1, **characterized in that** the heating of the water-soluble or water-dispersible enveloping material in step a) takes place by means of hot air, heat radiation or contact with a heated plate.

3. The method according to any of claims 1 or 2, **characterized in that** the temperature T¹ is at least 35°C, preferentially at least 40°C, preferably at least 50°C, more preferably at least 60°C and in particular at least 70°C.

4. The method according to any of claims 1 or 2, **characterized in that** the cooling of the enveloping material in step c) takes place by means of cold air or contact with a cooled surface.

5. The method according to any of claims 1 to 4, **characterized in that** the temperature T² is at least 5°C, preferentially at least 10°C, preferably at least 20°C and in particular at least 40°C below the temperature T¹.

6. The method according to any of claims 1 to 5, **characterized in that** the volume of the holding chamber in step b) is at least 1 mL, preferentially at least 2 mL, preferably at least 4 mL and in particular at least 8 mL.

7. The method according to any of claims 1 to 6, **characterized in that** the volume ratio of the holding chamber volume produced in step d) to the holding chamber volume produced in step b) is 10:1 to 1:10, preferentially 7:1 to 1:5, preferably 5:1 to 1:13, more preferably 4:1 to 1:2 and in particular 3:1 to 1:1.

8. The method according to any of claims 1 to 7, **characterized in that** one of the applied water-soluble or water-dispersible enveloping materials comprises a water-soluble or water-dispersible polymer, preferentially a polymeric film.

9. The method according to any of claims 1 to 8, **characterized in that** the holding chamber formed in step b) is filled before, simultaneously with or after cooling.

10. The method according to any of claims 1 to 9, **characterized in that** the enlarged holding chamber formed in step d) is filled in a subsequent step e).

11. The method according to any of claims 9 or 10, **characterized in that** the filled holding chamber is sealed.

12. The method according to any of claims 9 or 10, **characterized in that** the holding chamber(s) is(are) filled with an active substance or an active substance mixture from the ranges of pharmaceutical products, cosmetics, fodder, plant protective agents or fertilizers, adhesives, food and/or body care agents, however preferentially from the field of washing and cleaning active substances.

## Revendications

1. Procédé pour la réalisation d'un contenant soluble ou dispersible dans l'eau présentant au moins une chambre de réception, comprenant les étapes de :
a) chauffage d'un premier matériau d'enveloppe soluble ou dispersible dans l'eau à une température T¹ ;
b) façonnage du matériau d'enveloppe avec réalisation d'une chambre de réception par moulage du matériau d'enveloppe dans un creux d'emboutissage profond ;
c) refroidissement du matériau d'enveloppe façonné à une température T² < T¹;
d) abaissement du fond du creux d'emboutissage profond et façonnage du matériau d'enveloppe avec agrandissement de la chambre de réception formée dans l'étape b).

2. Procédé selon la revendication 1, **caractérisé en ce que** le chauffage du matériau d'enveloppe soluble ou dispersible dans l'eau dans l'étape a) est réalisé par de l'air chaud, par un rayonnement thermique ou par contact avec une plaque chauffante.

3. Procédé selon l'une quelconque des revendications 1 ou 2, **caractérisé en ce que** la température T¹ est d'au moins 35°C, de préférence d'au moins 40°C, de préférence d'au moins 50°C, de manière particulièrement préférée d'au moins 60°C et en particulier d'au moins 70°C.

4. Procédé selon l'une quelconque des revendications 1 ou 2, **caractérisé en ce que** le refroidissement du matériau d'enveloppe dans l'étape c) est réalisé par de l'air froid ou par contact avec une surface refroidie.

5. Procédé selon l'une quelconque des revendications 1 à 4, **caractérisé en ce que** la température T² est inférieure d'au moins 5°C, de préférence d'au moins 10°C, de préférence d'au moins 20°C et de manière particulièrement préférée d'au moins 40°C à la température T¹.

6. Procédé selon l'une quelconque des revendications 1 à 5, **caractérisé en ce que** le volume de la chambre de réception dans l'étape b) est d'au moins 1 ml, de préférence d'au moins 2 ml, de préférence d'au moins 4 ml et en particulier d'au moins 8 ml.

7. Procédé selon l'une quelconque des revendications 1 à 6, **caractérisé en ce que** le rapport du volume de la chambre de réception produit dans l'étape d) au volume de la chambre de réception produit dans l'étape b) est de 10:1 à 1:10, de préférence de 7:1 à 1:5, de préférence de 5:1 à 1:13, de manière particulièrement préférée de 4:1 à 1:2 et en particulier de 3:1 à 1:1.

8. Procédé selon l'une quelconque des revendications 1 à 7, **caractérisé en ce qu'**un des matériaux d'enveloppe solubles ou dispersibles dans l'eau utilisés comprend un polymère soluble ou dispersible dans l'eau, de préférence une feuille polymère.

9. Procédé selon l'une quelconque des revendications 1 à 8, **caractérisé en ce que** la chambre de réception formée dans l'étape b) est remplie avant, en même temps que ou après le refroidissement.

10. Procédé selon l'une quelconque des revendications 1 à 9, **caractérisé en ce que** la chambre de réception agrandie formée dans l'étape d) est remplie dans une étape e) subséquente.

11. Procédé selon l'une quelconque des revendications 9 ou 10, **caractérisé en ce que** la chambre de réception remplie est scellée.

12. Procédé selon l'une quelconque des revendications 9 ou 10, **caractérisé en ce que** la/les chambre(s) de réception est/sont remplie(s) avec une substance active ou un mélange de substances actives des domaines des produits pharmaceutiques, des cosmétiques, des matières fourragères, des agents de phytoprotection ou des engrais, des adhésifs, des aliments et/ou des agents de soin corporel, de préférence cependant du domaine des substances actives en lavage et en nettoyage.
